# EUROPEAN PATENT SPECIFICATION

(11) **EP 2 852 008 B1**
(45) Date of publication and mention of the grant of the patent: **04.09.2019**
(21) Application number: 13860465.7
(22) Date of filing: 05.07.2013
(51) Int. Cl.: H01R 27/00

(54) **CARD BASE FOR SIM CARD AND MOBILE TERMINAL**
KARTENTRÄGER FÜR EINE SIM-KARTE UND MOBILES ENDGERÄT DAMIT
BASE DE CARTE POUR CARTE SIM ET TERMINAL MOBILE

(30) Priority: 03.12.2012 CN 201210511367
(43) Date of publication of application: 25.03.2015
(73) Proprietor: Xiaomi Inc., Beijing 100085 (CN)
(72) Inventor: WANG, Shaojie, Beijing 100085 (CN); ZHANG, Jianjun, Beijing 100085 (CN); SHI, Shasha, Beijing 100085 (CN); WU, Fenghui, Beijing 100085 (CN)
(74) Representative: Hanna Moore + Curley
(86) International application number: PCT/CN2013/078925
(87) International publication number: WO 2014/086141

(56) References cited:
- CN-A- 102 709 725
- CN-A- 103 001 079
- CN-U- 202 103 241
- CN-U- 202 564 731
- CN-U- 202 977 922
- JP-A- 2012 003 920
- US-A1- 2012 276 764

## Description

### TECHNICAL FIELD

The present disclosure relates to an electronic product and, in particular, to a SIM card seat and a mobile terminal.

### BACKGROUND

SIM card is the abbreviation for "Subscriber Identity Module", which can also be called smart card or ID card. SIM card can store the user's data, authentication algorithm and key for identifying the subscriber identity by GSM system. Mobile phone cannot be used without SIM card. SIM card is usually positioned in a SIM card seat of the mobile phone.

With science progress and mobile communication development, the mobile phone is constantly updated in construction, design and performance. In the present market, there are lots of types of mobile phones, and also lots of types of SIM cards for adapting to the mobile phones. For example, most types of mobile phones use normal SIM card, IPHONE 4 and 4s use Micro SIM card, and IPHONE 5 uses Nano SIM card. The conventional SIM card seat comprises a card case for receiving a SIM card, and a signal terminal for conducting with the SIM card.

Under the structure limitation, the SIM card seat of one type of mobile phone can only match a corresponding type of SIM card, that is, one type of mobile phone can only be suitable to receive one type of SIM card. For example, for IPHONE 4, the Micro SIM card cannot be replaced with a Mini SIM card. Therefore, when replacing a mobile phone, he or she has to choose the same type of mobile phone for matching the original SIM card in the case that the user does not change the SIM card, or has to give up the original SIM card to choose a mobile phone with a different type of SIM card, which may cause inconvenience to the user and result in waste of resources.

The relevant state of the art is represented by US 2012/0276764 A1, CN 202 564 731 U, which discloses a card seat assembly with a push rod, and CN 102 709 725 A.

### SUMMARY

The invention is defined in the claims. In order to solve the related technical problems, the present disclosure provides a SIM card seat assembly and mobile terminal, in accordance with claims which follow. The SIM card seat can match different types of SIM cards, thus the original SIM card can match different types of mobile phones without the need of being replaced.

The present disclosure provides the following technical solutions.

In an aspect, the invention provides A SIM card seat, positioned on a motherboard and used for receiving a SIM card, comprising a housing, a signal conducting terminal, a card holder and an eject mechanism, wherein the signal conducting terminal is disposed on the motherboard for conducting with the SIM card, a receiving space is formed between an area of the motherboard where the signal conducting terminal is located and the housing, which is used for receiving the card holder and the eject mechanism, the card holder is used for receiving the SIM card and matching different types of SIM cards, the eject mechanism is used for popping the card holder out of the SIM card seat from the receiving space.

Preferably, the eject mechanism comprises a first rod, a second rod and a push pin;
in a normal state, the first rod and second rod are positioned perpendicularly to each other in the receiving space with the end of the first rod at the side of the head of the second rod, and parallel to two adjacent sides of the card holder respectively, and
in a work state, the push pin acts on the first rod, such that the first rod moves in the action force direction and drives the second rod to move in a lever manner, wherein the end of the second rod acts as the force bearing point acting on the inner side edge of the card holder to make the card holder move outwardly relative to the receiving space, the inner side edge is a side edge of the card holder relative to an inner part of the receiving space.

Preferably, the card holder comprises a body which is provided with a recess for receiving the SIM card.

Preferably, the card holder has an integral structure.

Preferably, the card holder has a split type structure.

More preferably, the body comprises a frame and an insert block which are connected to each other in a split manner, the frame is used for receiving the insert block, and the recess is disposed on the insert block.

In another aspect, the invention provides a mobile terminal, comprising a SIM card seat for receiving a SIM card, and a motherboard on which the SIM card seat is positioned, wherein, the SIM card seat comprises a housing, a signal conducting terminal, a card holder and an eject mechanism, the signal conducting terminal is disposed on the motherboard for conducting with the SIM card, a receiving space is formed between an area of the motherboard where the signal conducting terminal is located and the housing, which is used for receiving the card holder and the eject mechanism, the card holder is used for receiving the SIM card and matching different types of SIM cards, the eject mechanism is used for popping the card holder out of the SIM card seat from the receiving space.

Preferably, the eject mechanism comprises a first rod, a second rod and a push pin;
in a normal state, the first rod and second rod are positioned perpendicularly to each other in the receiving space with the end of the first rod at the side of the head of the second rod, and parallel to two adjacent sides of the card holder respectively, and
in a work state, the push pin acts on the first rod, such that the first rod moves in the action force direction to move the second rod in a lever manner, wherein the end of the second rod acts as the force bearing point acting on the inner side edge of the card holder to make the card holder move outwardly relative to the receiving space, the inner side edge is a side edge of the card holder relative to inner part of the receiving space.

Preferably, the card holder comprises a body which is provided with a recess for receiving the SIM card.

Preferably, the card holder has an integral structure.

Preferably, the card holder has a split type structure.

More preferably, the body comprises a frame and an insert block which are connected to each other in a split manner, the frame is used for receiving the insert block, and the recess is disposed on the insert block.

The technical solutions of the present disclosure bring about the following beneficial effects. According to the present embodiments, the card holder can be popped out of the receiving space by the eject mechanism, and be replaced by other different types of card holders, such that the SIM card seat can match different types of SIM card. Thus the mobile terminal having the SIM card can match various SIM cards. Therefore, the original SIM card can match various mobile phones without the need of being replaced, which brings convenience to the user and reduces waste of resources.

### BRIEF DESCRIPTION OF THE DRAWINGS

The foregoing and other features and advantages of the disclosure will be apparent to those skilled in the art in view of the following detailed description, taken in conjunction with the accompanying drawings. The drawings are for illustrative purposes for some embodiments only. It is obvious to the person skilled in the art that other drawing may be obtained based on the drawing in the present embodiment without any creative labor.
Fig. 1 illustrates a front view of a SIM card according to an embodiment of the disclosure.
Fig. 2 illustrates a back view of FIG. 1 of the disclosure.
Fig. 3 illustrates a right view of FIG. 2.
Fig. 4 illustrates an assembly view of the SIM card, the signal conducting terminal, the card holder and the eject mechanism according to an embodiment of the disclosure.
Fig. 5 illustrates a card holder according to an embodiment of the disclosure.
Fig. 6 illustrates a card holder according to another embodiment of the disclosure.
Fig. 7 illustrates a card holder according to still another embodiment of the disclosure.
Fig. 8 illustrates a card holder according to yet another embodiment of the disclosure.
Fig. 9 illustrates a schematic view of the structure of the mobile terminal according to an embodiment of the disclosure.
symbols and related elements:
- 1: housing
- 2: signal conducting terminal
- 3: card holder
- 31: body
- 31A: frame
- 31B: insert block
- 32: recess
- 33: hole
- 4: eject mechanism
- 41: a first rod
- 41A: head of the first rod
- 41B: tail end of the first rod
- 42: a second rod
- 42A: head of the second rod
- 42B: tail end of the second rod
- 43: push pin
- 50: SIM card seat
- 60: SIM card
- 70: motherboard
- 100: mobile terminal

### DETAILED DESCRIPTION

To make the object, solution and advantages of the disclosure clear and apparent, exemplary embodiments of the disclosure will now be described more fully with reference to the accompanying drawings.

### Embodiment 1

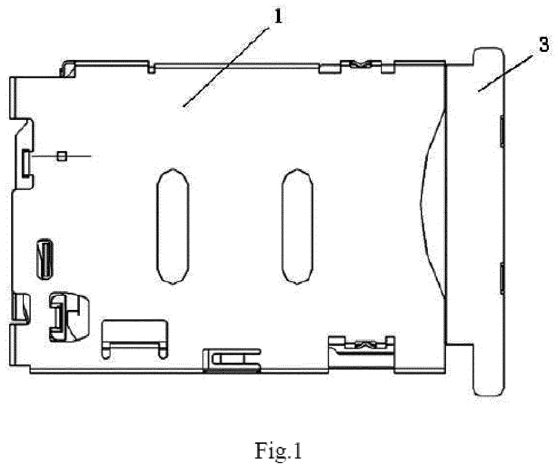

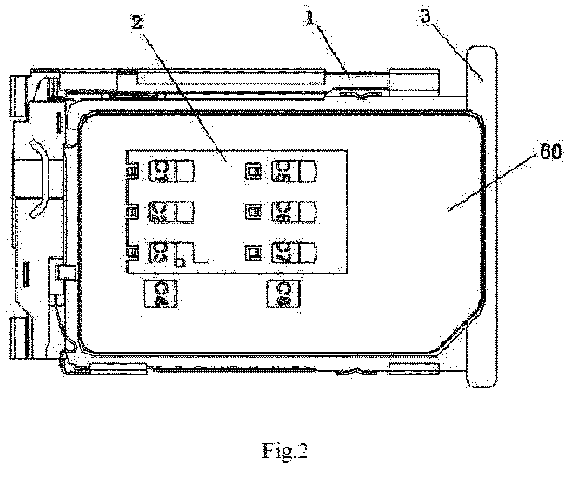

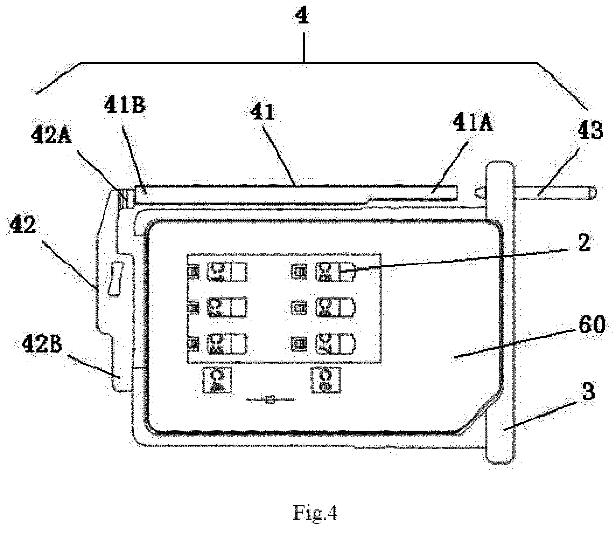

As shown in Fig. 1 and also referring to Figs.2 to 4, the present disclosure is illustrated mainly based on Fig.2. The present embodiment of the invention provides a SIM card seat which is positioned on a motherboard (not shown) for receiving a SIM card 60. The SIM card seat comprises a housing 1, a signal conducting terminal 2, a card holder 3 and a eject mechanism (device? Mechanism?) 4 (referring to Fig. 4). The signal conducting terminal 2 is disposed on the motherboard to have conduction with the SIM card 60. A receiving space is formed between the housing 1 and the area of the motherboard where the signal conducting terminal 2 is located, which is used for receiving the card holder 3 and the eject mechanism 4 (referring to Fig. 4). The card holder 3 is used for receiving the SIM card 60 and matching different types of SIM cards. The eject mechanism 4 (referring to Fig. 4) is used for popping the card holder 3 out of the SIM card seat from the receiving space.

As shown in Fig.2, according to an embodiment of the invention, the card holder 3 can be popped out of the receiving space by the eject mechanism 4, and can be replaced by a different type of card holder 3, such that the SIM card seat can match different types of SIM cards 60, and thus the mobile terminal having the SIM card 60 can match various SIM cards. Therefore, the original SIM card 60 can match various mobile phones without the need of being replaced, which brings convenience to the user, provides better user experience, and reduces waste of resources.

Preferably, as shown in Fig. 2, in the present embodiment, the area of the motherboard where signal conducting terminal 2 is located and the housing are in integral construction.

For the person skilled in the art, it can be understood that the area of the motherboard where signal conducting terminal 2 is located and the housing may be in separate construction, such as snap-fit attachment.

Preferably, as shown in Fig. 4, in the present embodiment, the eject mechanism 4 comprises a first rod 41, a second rod 42 and a push pin 43.

In a normal state, the first rod 41 and second rod 42 are positioned perpendicularly to each other in the receiving space with the tail end 41B of the first rod at the side of the head 42A of the second rod, and parallel to two adjacent sides of the card holder, respectively.

In a work state, the push pin 43 acts on the first rod 41, such that the first rod 41 moves in the action force direction and drives the second rod 42 to move in a lever manner, in which case the tail end 42B of the second rod acts as the force bearing point acting on the inner side edge of the card holder to make the card holder move outwardly relative to the receiving space. The inner side edge of the card holder is the side edge relative to the inner part of the receiving space.

It should be noted that, the terms "head" and "end" are defined relatively. In the present embodiment, the end part of the first rod 41 that contacts the push pin 43 is defined as the head of the first rod 41, thus the other end part of the first rod 41 is defined as the tail end of the first rod 41. The end part of the second rod 42 that contacts the first rod 41 is defined as the head of the second rod 42, thus the other end part of second rod 42 is defined as the tail end of the second rod 42.

For the person skilled in the art, it can be understood that the eject mechanism 4 is not limited to the above structure, other structures such as an elastic piece can be used.

As shown in Fig.4, the SIM card 60 is installed in the following manner: positioning the SIM card 60 on the card holder 3, and then inserting the card holder 3 with the SIM card 60 into the receiving space, such that the SIM card 60 is installed already. The SIM card 60 is replaced in the following manner: pushing the push pin 43 leftward against the head 41A of the first rod of the eject mechanism 4 through the card holder 3 to move the first rod 41 leftward via the force exerted by the push pin 43 until the tail end 41B of the first rod contacts the head 42A of the second rod 42 to make the second rod 42 move in a lever manner, such that the card holder 3 is popped out of the receiving space through the rightward movement of the tail end 42B of the second rod. Then the SIM card 60 can be replaced. It is unnecessary to replace the card holder 3 if the type of the SIM card 60 is not changed, whereas it is necessary to replace the card holder 3 if the type of the SIM card 60 is changed.

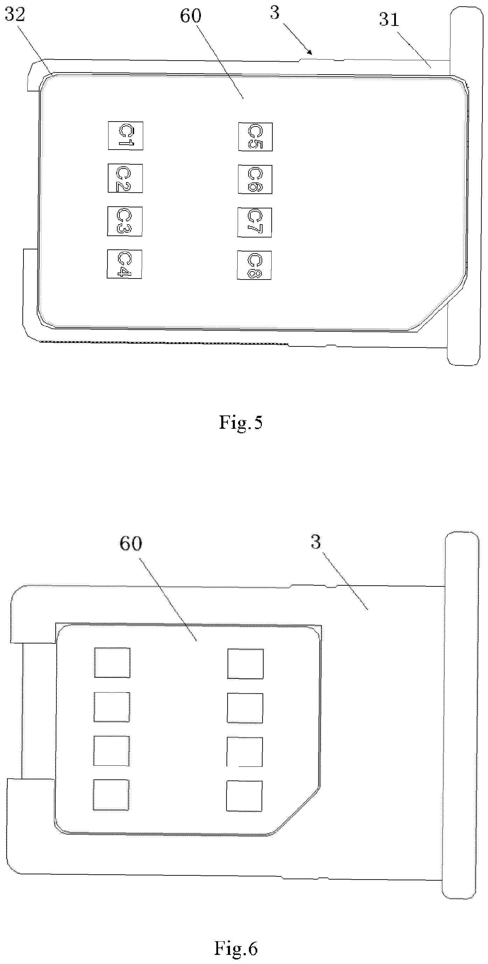

Preferably, as shown in Fig. 5, the card holder 3 comprises a body 31, which is provided with a recess 32 for receiving the SIM card 60.

Preferably, as shown in Figs. 5 to 7, the card holder 3 has an integral construction, that is, the body 31 has an integral construction.

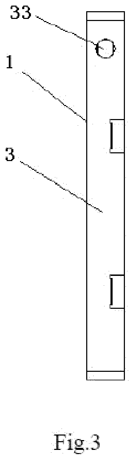

As shown in Fig. 3,a hole 33 is provided in the body 31 of the card holder 3, which is used to pass through and guide the push pin 43 (as shown in Fig. 4).

As shown in Fig. 5, in the present embodiment, the card holder 3 may match Mini SIM card.

As shown in Fig. 6, in the present embodiment, the card holder 3 may match Micro SIM card.

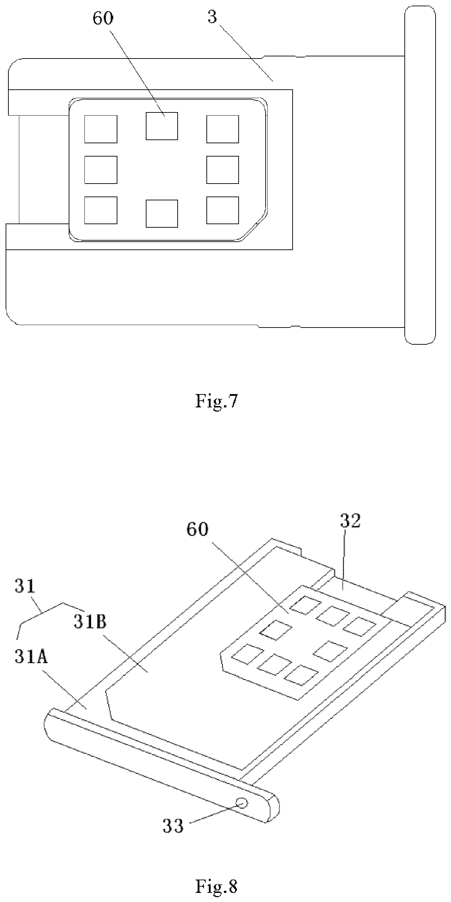

As shown in Fig. 7, in the present embodiment, the card holder 3 may match Nano SIM card.

As shown in Fig. 8, the card holder 3 has a split type structure.

As shown in Fig. 8, the body 31 is in split type structure. The body 31 comprises a frame 31A and an insert block 31B which are connected to each other in a split manner. The frame 31A is used for receiving the insert block 31B. The insert block 31B is provided with a recess 32 for matching the SIM card 60. In the present embodiment, the card holder can match different types of SIM cards 60 by changing different insert blocks 31B.

### Embodiment 2

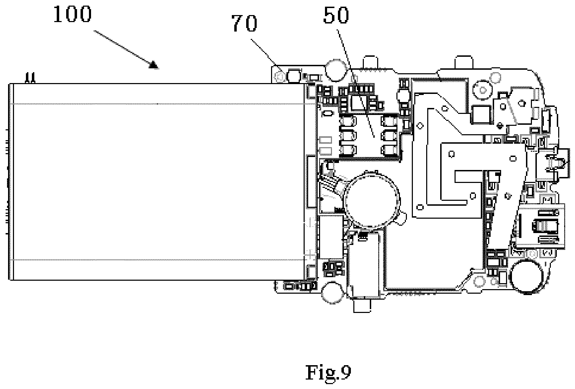

As shown in Fig. 9, the present embodiment provides a mobile terminal 100 which comprises SIM card seat 50 for locating SIM card 60 (as shown in Fig. 2), and a motherboard 70 on which the SIM card seat 50 is positioned. Referring to Fig. 2, The SIM card seat comprises a housing 1, a signal conducting terminal 2, a card holder 3 and a eject mechanism 4 (as shown in Fig. 4). The signal conducting terminal 2 is mounted on the motherboard 70 (as shown in Fig. 9) for conducting with the SIM card 60. A receiving space (not shown) is formed between the area of the motherboard where the signal conducting terminal 2 is located and the housing 1, which is used for receiving the card holder 3 and the eject mechanism 4 (as shown in Fig. 4). The card holder 3 is used for receiving the SIM card 60 and matching different types of SIM cards. The eject mechanism 4 (as shown in Fig. 4) is used for popping the card holder 3 out of the SIM card seat from the receiving space.

As shown in Fig.2, according to an embodiment of the invention, the card holder 3 can be popped out of the receiving space by the eject mechanism 4, and be replaced by a different type of card holder 3, such that SIM card seat 50 (as shown in Fig. 9) can match different types of SIM cards 60, and thus the mobile terminal 100 (as shown in Fig. 9) having the SIM card 60 can match various SIM cards. Therefore, the original SIM card 60 can match various mobile phones without the need of being replaced, which brings convenience to the user, provides better user experience, and reduces waste of resources.

Preferably, as shown in Fig. 2, in the present embodiment, the area of the motherboard where the signal conducting terminal 2 is located and the housing are in integral construction.

For the person skilled in the art, it can be understood that the area of the motherboard where signal conducting terminal 2 is located and the housing may be in separate construction, such as snap-fit attachment.

Preferably, as shown in Fig. 4, in the present embodiment, the eject mechanism 4 comprises a first rod 41, a second rod 42 and a push pin 43.

In a normal state, the first rod 41 and second rod 42 are positioned perpendicularly to each other in the receiving space with the tail end 41B of the first rod at the side of the head 42A of the second rod, and parallel to two adjacent sides of the card holder, respectively.

In a work state, the push pin 43 acts on the first rod 41, such that the first rod 41 moves in the action force direction and drives the second rod 42 to move in a lever manner, in which case the tail end 42B of the second rod acts as the force bearing point acting on the inner side edge of the card holder to make the card holder move outwardly relative to the receiving space. The inner side edge of the card holder is the side edge relative to the inner part of the receiving space. It should be noted that, the terms "head" and "end" are defined relatively. In the present embodiment, the end part of the first rod 41 that contacts the push pin 43 is defined as the head of the first rod 41, thus the other end part of the first rod 41 is defined as the tail end of the first rod 41. The end part of the second rod 42 that contacts the first rod 41 is defined as the head of the second rod 42, thus the other end part of second rod 42 is defined as the tail end of the second rod 42.

For the person skilled in the art, it can be understood that the eject mechanism 4 is not limited to the above structure, other structures such as an elastic piece can be used.

As shown in Fig.4, the SIM card 60 is installed in the following manner: positioning the SIM card 60 on the card holder 3, and then inserting the card holder 3 with the SIM card 60 into the receiving space, such that the SIM card 60 is installed already. The SIM card 60 is replaced in the following manner: pushing the push pin 43 leftward against the head 41A of the first rod of the eject mechanism 4 through the card holder 3 to move the first rod 41 leftward via the force exerted by the push pin 43 until the tail end 41B of the first rod contacts the head 42A of the second rod 42 to make the second rod 42 move in a lever manner, such that the card holder 3 is popped out of the receiving space through the rightward movement of the tail end 42B of the second rod. Then the SIM card 60 can be replaced. It is unnecessary to replace the card holder 3 if the type of the SIM card 60 is not changed, whereas it is necessary to replace the card holder 3 if the type of the SIM card 60 is changed.

As shown in Fig. 5, the card holder 3 comprises a body 31, which is provided with a recess 32 for receiving the SIM card 60.

As shown in Figs. 5 to 7, the card holder 3 has an integral construction, that is, the body 31 has an integral construction.

Preferably, as shown in Fig. 3, a hole 33 is provided in the body 31 of the card holder 3, which is used to pass through and guide the push pin 43 (as shown in Fig. 4).

As shown in Fig. 5, in the present embodiment, the card holder 3 may match Mini SIM card.

As shown in Fig. 6, in the present embodiment, the card holder 3 may match Micro SIM card.

As shown in Fig. 7, in the present embodiment, the card holder 3 may match Nano SIM card.

Preferably, as shown in Fig. 8, the card holder 3 has a split type structure.

Preferably, as shown in Fig. 8, the body 31 is in split type structure. The body 31 comprises a frame 31A and an insert block 31B which are connected to each other in a split manner. The frame 31A is used for receiving the insert block 31B. The insert block 31B is provided with a recess 32 for matching the SIM card 60. In the present embodiment, the card holder can match different types of SIM cards 60by changing insert blocks 31B.

The sequence of the embodiments is for illustration only and does not relate to their performances.

## Claims

1. A Subscriber Identity Module (SIM) card seat assembly, adapted for positioning on a motherboard (70) and used for receiving a SIM card, comprising a housing (1), a signal conducting terminal (2), a card holder (3) and an eject mechanism (4), wherein the signal conducting terminal (2) is adapted to be disposed on the motherboard for conducting with the SIM card, and wherein the SIM card assembly is adapted so that a receiving space is formed between an area of the motherboard where the signal conducting terminal is located and the housing (1), the receiving space being adapted for receiving the card holder (3) and the eject mechanism (4), the card holder (3) being adapted for receiving a SIM card and matching different types of SIM cards, the eject mechanism (4) being adapted for popping the card holder out of the SIM card seat from the receiving space,
wherein the eject mechanism (4) comprises a first rod (41), and a second rod (42); whereby in a normal state, the first rod and second rod are positioned perpendicularly to each other in the receiving space with the end of the first rod at the side of the head (42A) of the second rod, and parallel to two adjacent sides of the card holder (3) respectively, and wherein a notch is provided on a side of the card holder, and the position of the notch corresponds to the position of the second rod; whereby in a work state, a force is acted on the first rod, such that the first rod moves in the action force direction and drives the second rod to move in a lever manner, wherein a tail end (42B) of the second rod acts as a force bearing point acting on the inner side edge of the card holder to urge the card holder move outwardly relative to the receiving space, the inner side edge being a side edge of the card holder relative to an inner part of the receiving space; and whereby the eject mechanism further comprises a push pin (43) adapted to be pushed against the head end (41A) of the first rod (41) to provide the force acting on the first rod in the work state, wherein the push pin (43) is passed through and guided by a hole (33) in the body (31) of the card holder (3).

2. The SIM card seat according to claim 1, wherein the card holder (3) comprises a body (31) which is provided with a recess (32) for receiving a SIM card (60).

3. The SIM card seat according to claim 2, wherein the card holder (3) has a split type structure.

4. The SIM card seat according to claim 3, wherein the body (31) comprises a frame (31A) and an insert block (31B) which are connected to each other in a split manner, the frame is adapted to receive the insert block, and the recess (32) is disposed on the insert block.

5. A mobile terminal (100), comprising the SIM card seat for receiving a SIM card (60), according to any one of claims 1 to 4, and a motherboard (70) onto which the SIM card seat is positioned.

## Patentansprüche

1. Teilnehmer-Identitätsmodul- (SIM-) Kartenaufnahmeanordnung, die zur Positionierung auf einer Hauptplatine (70) angepasst ist und für die Aufnahme einer SIM-Karte verwendet wird, umfassend ein Gehäuse (1), ein Signalleitendgerät (2), eine Kartenhalterung (3) und einen Auswurfmechanismus (4), wobei das Signalleitendgerät (2) dazu angepasst ist, auf der Hauptplatine zum Leiten mit der SIM-Karte angeordnet zu sein, und wobei die SIM-Kartenanordnung so angepassst ist, dass ein Aufnahmeraum zwischen einer Fläche der Hauptplatine, wo sich das Signalleitendgerät befindet, und dem Gehäuse (1) gebildet ist, wobei der Aufnahmeraum zur Aufnahme der Kartenhalterung (3) und des Auswurfmechanismus (4) angepasst ist, wobei die Kartenhalterung (3) zur Aufnahme einer SIM-Karte und passenden unterschiedlichen Arten von SIM-Karten angepasst ist, wobei der Auswurfmechanismus (4) zum Auswerfen der Kartenhalterung aus der SIM-Kartenaufnahme von dem Aufnahmeraum angepasst ist,
wobei der Auswurfmechanismus (4) einen ersten Stab (41) und einen zweiten Stab (42) umfasst; wodurch
in einem normalen Zustand, der erste Stab und der zweite Stab senkrecht zueinander in dem Aufnahmeraum mit dem Ende des ersten Stabs auf der Seite des Kopfes (42A) des zweiten Stabs positioniert sind, und jeweils parallel zu zwei angrenzenden Seiten der Kartenhalterung (3), und wobei eine Kerbe auf einer Seite der Kartenhalterung bereitgestellt ist, und die Position der Kerbe der Position des zweiten Stabs entspricht; wodurch
in einem Arbeitszustand, eine Kraft auf den ersten Stab aufgebracht wird, so dass sich der erste Stab in Aktionskraftrichtung bewegt und den zweiten Stab so antreibt, dass er sich in der Art eines Hebels bewegt, wobei ein hinteres Ende (42B) des zweiten Stabs als krafttragender Punkt wirkt, der auf die innere Seitenkante der Kartenhalterung wirkt, um zu verursachen, dass sich die Kartenhalterung nach außen relativ zum Aufnahmeraum bewegt, wobei die innere Seitenkante eine Seitenkante der Kartenhalterung relativ zu einem inneren Teil des Aufnahmeraums ist; und wodurch
der Auswurfmechanismus ferner einen Druckstift (43) umfasst, der dazu angepasst ist, gegen das Kopfende (41A) des ersten Stabs (41) gedrückt zu werden, um die Kraft, die auf den ersten Stab im Arbeitszustand wirkt, bereitzustellen, wobei der Druckstift (43) durch ein Loch (33) im Körper (31) der Kartenhalterung (3) verläuft und davon geführt wird.

2. SIM-Kartenaufnahme nach Anspruch 1, wobei die Kartenhalterung (3) einen Körper (31) umfasst, der mit einer Ausnehmung (32) zur Aufnahme einer SIM-Karte (60) versehen ist.

3. SIM-Kartenaufnahme nach Anspruch 2, wobei die Kartenhalterung (3) eine geteilte Struktur aufweist.

4. SIM-Kartenaufnahme nach Anspruch 3, wobei der Körper (31) einen Rahmen (31A) und einen Einfügungsblock (31B) umfasst, die miteinander auf geteilte Weise verbunden sind, wobei der Rahmen dazu angepasst ist, den Einfügungsblock aufzunehmen, und die Ausnehmung (32) an dem Einfügungsblock angeordnet ist.

5. Mobiles Endgerät (100), das die SIM-Kartenaufnahme zur Aufnahme einer SIM-Karte (60) nach einem der Ansprüche 1 bis 4, und eine Hauptplatine (70), auf welcher die SIM-Kartenaufnahme positioniert ist, umfasst.

## Revendications

1. Ensemble siège de carte de module d'identité d'abonné (SIM), conçu pour un positionnement sur une carte mère (70) et utilisé pour recevoir une carte SIM, comprenant un boîtier (1), une borne de conduction de signal (2), un dispositif de maintien de carte (3) et un mécanisme d'éjection (4), dans lequel la borne de conduction de signal (2) est conçue pour être disposée sur la carte mère pour une conduction avec la carte SIM, et dans lequel l'ensemble carte SIM est conçu de telle sorte qu'un espace de réception est formé entre une zone de la carte mère où la borne de conduction de signal est située et le boîtier (1), l'espace de réception étant conçu pour recevoir le dispositif de maintien de carte (3) et le mécanisme d'éjection (4), le dispositif de maintien de carte (3) étant conçu pour recevoir une carte SIM et s'adapter à différents types de cartes SIM, le mécanisme d'éjection (4) étant conçu pour sortir le dispositif de maintien de carte hors du siège de carte SIM depuis l'espace de réception,
dans lequel le mécanisme d'éjection (4) comprend une première tige (41) et une seconde tige (42) ; moyennant quoi
dans un état normal, la première tige et la seconde tige sont positionnées perpendiculairement l'une par rapport à l'autre dans l'espace de réception avec l'extrémité de la première tige au niveau du côté de la tête (42A) de la seconde tige, et parallèles à deux côtés adjacents du dispositif de maintien de carte (3), respectivement, et dans lequel une encoche est disposée sur un côté du dispositif de maintien de carte, et la position de l'encoche correspond à la position de la seconde tige ; moyennant quoi
dans un état de travail, une force agit sur la première tige, de telle sorte que la première tige se déplace dans la direction de force d'action et entraîne la seconde tige à se déplacer à la manière d'un levier, dans lequel une extrémité de queue (42B) de la seconde tige agit en tant que point d'application de force agissant sur le bord latéral interne du dispositif de maintien de carte pour amener le dispositif de maintien de carte à se déplacer vers l'extérieur par rapport à l'espace de réception, le bord latéral interne étant un bord latéral du dispositif de maintien de carte par rapport à une partie interne de l'espace de réception ; et moyennant quoi
le mécanisme d'éjection comprend en outre une goupille-poussoir (43) conçue pour être poussée contre l'extrémité de tête (41A) de la première tige (41) de manière à fournir la force agissant sur la première tige dans l'état de travail, dans lequel la goupille-poussoir (43) traverse un trou (33) dans le corps (31) du dispositif de maintien de carte (3) et est guidée par celui-ci.

2. Siège de carte SIM selon la revendication 1, dans lequel le dispositif de maintien de carte (3) comprend un corps (31) qui comporte un renfoncement (32) pour recevoir une carte SIM (60).

3. Siège de carte SIM selon la revendication 2, dans lequel le dispositif de maintien de carte (3) présente une structure de type fente.

4. Siège de carte SIM selon la revendication 3, dans lequel le corps (31) comprend un cadre (31A) et un bloc d'insertion (31B) qui sont reliés l'un à l'autre d'une manière fendue, le cadre étant conçu pour recevoir le bloc d'insertion, et le renfoncement (32) étant disposé sur le bloc d'insertion.

5. Terminal mobile (100), comprenant le siège de carte SIM pour recevoir une carte SIM (60), selon l'une quelconque des revendications 1 à 4, et une carte mère (70) sur laquelle le siège de carte SIM est positionné.
